# FASCICULE DE BREVET EUROPEEN

(11) **EP 2 417 024 B1**
(45) Date de publication et mention de la délivrance du brevet: **20.03.2013**
(21) Numéro de dépôt: 10725361.9
(22) Date de dépôt: 06.04.2010
(51) Int. Cl.: B64C 11/06, F01D 21/04, F04D 29/32

(54) **HELICE POUR TURBOMACHINE D'AERONEF COMPRENANT UN ANNEAU DE RETENTION D'AUBES MONTE AUTOUR DU MOYEU**
PROPELLER FÜR EIN TURBOTRIEBWERK EINES LUFTFAHRZEUGS MIT EINEM UM EINE NABE HERUM ANGEBRACHTEN FLÜGELHALTERING
PROPELLER FOR AN AIRCRAFT TURBINE ENGINE INCLUDING A BLADE-RETAINING RING MOUNTED AROUND A HUB

(30) Priorité: 07.04.2009 FR 0952270
(43) Date de publication de la demande: 15.02.2012
(73) Titulaire: Airbus Operations (Société par actions simplifiée), 31060 Toulouse (FR)
(72) Inventeur: LAFONT, Laurent, F-31320 Pechbusque (FR); PRAT, Damien, F-31770 Colomiers (FR); DIOCHON, Lionel, F-31200 Toulouse (FR)
(74) Mandataire: Ilgart, Jean-Christophe
(86) Numéro de dépôt international: PCT/FR2010/050651
(87) Numéro de publication internationale: WO 2010/116080

(56) Documents cités:
- EP-A2- 0 368 182
- FR-A- 1 575 682
- FR-A1- 2 645 499
- US-A- 5 224 831

## Description

### DOMAINE TECHNIQUE

La présente invention se rapporte de façon générale aux hélices de turbomachine pour aéronef, par exemple du type de celle divulguée dans le document FR 2 645 499, cF. le préambule de la revendication 1. Elle s'applique en particulier aux turboréacteurs, turbopropulseurs et turbomachines dites à « open rotor ».

### ÉTAT DE LA TECHNIQUE ANTÉRIEURE

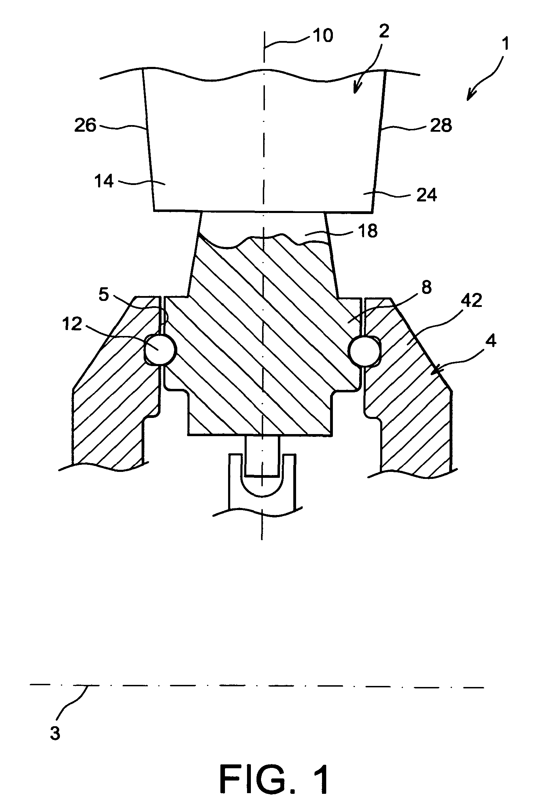

En référence à la figure 1, il est représenté une partie d'une hélice 1 de turbomachine d'aéronef du type open rotor, cette hélice 1 étant équipée d'une pluralité d'aubes 2, dont une seule est visible sur cette figure 1. A titre indicatif, de façon connue, une telle turbomachine comprend deux hélices contrarotatives, avec par exemple la première solidaire en rotation d'une première turbine libre de puissance, et la seconde hélice solidaire en rotation d'une seconde turbine libre de puissance, disposée en aval de la première.

L'hélice 1, d'axe longitudinal 3, comporte un moyeu 4 centré sur cet axe et présentant une pluralité d'orifices de logement 5 répartis circonférentiellement, chacun recevant le pied 8 de l'une des aubes 2. Pour ce faire, les orifices de logement 5 sont pratiqués traversant dans le moyeu, en s'étendant chacun radialement dans la direction de l'aube qu'ils logent, respectivement.

Comme visible sur la figure 1, chaque aube 2 a son pied 8 monté à rotation sur le moyeu 4 selon un axe 10, par exemple à l'aide d'un système de roulement à billes 12 implanté entre le pied 8 et l'orifice de logement 5. De cette manière, à l'aide d'un système de calage variable approprié (non représenté) coopérant judicieusement avec l'aube 2, celle-ci peut être pivotée en permanence durant le fonctionnement de la turbomachine, en fonction de l'incidence voulue.

Le pied 8 s'étend radialement vers l'extérieur jusqu'en sortie de son orifice de logement 5 pratiqué dans le moyeu. Par ailleurs, l'aube comprend une partie pale 14 située dans la veine, intégrant une jonction mécanique 18 de section réduite qui la relie au pied 8. Bien que cela n'ait pas été représenté, cette jonction 18 peut faire partie intégrante d'une pièce formant tulipe, dont la tête est logée au sein de la partie pale 14, et dont la tige de la tulipe est constituée par cette jonction 18 de section réduite. En outre, la tulipe peut être réalisée d'une seule pièce avec le pied 8, par exemple en matériau composite, de préférence comprenant un mélange de fibres de verre et/ou de carbone avec de la résine.

Pour ce qui concerne la partie pale 14, seule une partie de sa coque aérodynamique 24 a été représentée, cette coque formant, entre un bord d'attaque 26 et le bord de fuite 28, l'intrados et l'extrados de la pale. Cette coque est également préférentiellement réalisée d'une seule pièce, par exemple en matériau composite, de préférence comprenant un mélange de fibres de verre et/ou de carbone avec de la résine.

Le moyeu 4 présente donc les orifices de logement 5 répartis circonférentiellement, et pratiqués traversants. De plus, par le biais de ces orifices 5, le moyeu 4 assure une rétention des aubes 2 dans la direction radiale vers l'extérieur.

Si cette solution technique est largement répandue, elle présente néanmoins l'inconvénient qu'en cas de défaillance survenant sur le moyeu, il existe un risque non négligeable de perte des aubes.

### EXPOSÉ DE L'INVENTION

L'invention a donc pour but de proposer une hélice pour turbomachine d'aéronef remédiant au moins partiellement à l'inconvénient mentionné ci-dessus, relatif aux réalisations de l'art antérieur.

Pour ce faire, l'invention a pour objet une hélice pour turbomachine d'aéronef comprenant une pluralité d'aubes ainsi qu'un moyeu présentant une pluralité d'orifices de logement recevant les pieds desdites aubes, chaque pied d'aube étant monté rotatif dans son orifice de logement associé. Selon l'invention, ladite hélice présente également au moins une structure formant anneau de rétention d'aubes dans la direction radiale vers l'extérieur par rapport au moyeu, plaquée autour de ce dernier.

Ainsi, en cas de défaillance du moyeu dans sa fonction de rétention d'aubes dans la direction radiale vers l'extérieur, une ou plusieurs structures dédiées peuvent continuer à remplir ce rôle. Les risques de pertes d'aubes sont donc sensiblement réduits grâce à cette structure additionnelle de rétention, dont la mise en place autour du moyeu s'avère particulièrement aisée.

De préférence, chaque structure formant anneau de rétention d'aubes est équipée d'au moins un dispositif de serrage dans la direction circonférentielle. Ce dispositif, assimilable à un tendeur, permet donc d'assurer un serrage adéquat de la structure formant anneau de rétention, autour du moyeu.

De préférence, pour chaque structure formant anneau de rétention d'aubes, il est prévu une rainure s'étendant circonférentiellement sur l'un des deux éléments parmi le moyeu et la structure, ainsi qu'une saillie s'étendant circonférentiellement sur l'autre desdits deux éléments, et logée dans ladite rainure.

Cet assemblage permet d'obtenir un bon maintien de la structure formant anneau de rétention sur le moyeu de l'hélice, puisque ces éléments circonférentiels interdisent un déplacement relatif dans la direction axiale entre la structure et le moyeu. Surtout, pendant le serrage de la structure, celle-ci peut se déplacer relativement par rapport au moyeu selon la direction circonférentielle par coulissement relatif de la saillie dans la rainure, sans risquer de se déplacer axialement par rapport à ce même moyeu.

De préférence, chaque structure est réalisée à partir d'au moins deux secteurs angulaires montés les uns aux autres. Cela permet de faciliter le montage de la structure de rétention sur le moyeu.

Enfin, il est préférentiellement prévu deux structures, disposées respectivement de part et d'autre d'un plan transversal intégrant les axes de rotation des aubes. Ainsi, en cas de défaillance de l'une des deux structures, l'autre reste active et peut assurer à elle seule la rétention des aubes dans la direction radiale vers l'extérieur. Cela procure une fonction de sécurité en cas de défaillance, également dénommée fonction « Fail Safe ».

L'invention a également pour objet une turbomachine pour aéronef comprenant au moins une hélice telle que celle décrite ci-dessus.

Préférentiellement, la turbomachine est un turboréacteur, un turbopropulseur, ou un « open rotor ». Ainsi, dans le cas du turboréacteur, il s'agit des aubes de la soufflante, alors que dans les deux cas suivants, il s'agit des aubes des hélices.

Enfin, l'invention a pour objet un aéronef comprenant une pluralité de turbomachines telle que celle mentionnée ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue partielle de face en demi-coupe longitudinale d'une hélice connue de l'art antérieur, cette vue schématique s'appliquant également pour la présente invention ;
- la figure 2 représente une vue partielle de face en demi-coupe longitudinale d'une hélice selon un mode de réalisation préféré de la présente invention ;
- la figure 3 représente une vue en coupe prise le long de la ligne III-III de la figure 2 ; et
- la figure 4 représente une vue similaire à celle de la figure 2, sur laquelle l'hélice se présente sous la forme d'un autre mode de réalisation préféré de la présente invention.

### EXPOSÉ DÉTAILLÉ DE MODES DE RÉALISATION PREFERES

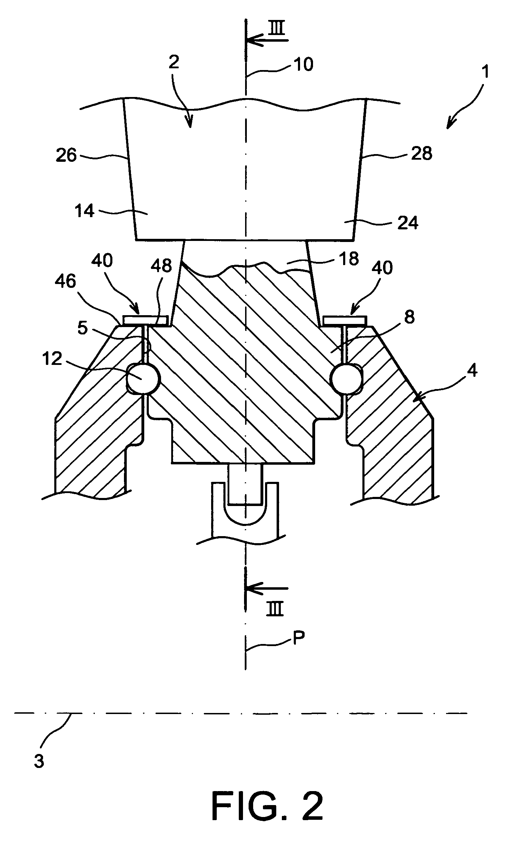

En référence à la figure 2, on voit une hélice 1 de turbomachine du type « open rotor » selon un mode de réalisation préféré de la présente invention, turbomachine dans laquelle deux hélices contrarotatives sont respectivement entraînées en rotation par deux turbines libres de puissance. Cette hélice 1 reprend l'ensemble des caractéristiques de l'hélice montrée sur la figure 1. D'ailleurs, sur les figures, les éléments portant les mêmes références numériques correspondent à des éléments identiques ou similaires.

Ainsi, on peut apercevoir que dans ce mode de réalisation préféré, il a été ajouté deux structures 40 formant anneau de rétention des aubes 2 dans la direction radiale vers l'extérieur. Ces deux structures 40 sont disposées respectivement de part et d'autre d'un plan transversal P intégrant les axes de rotation 10 des aubes, et plus précisément de part et d'autre des jonctions 18 de celles-ci, à distance desquelles elles sont positionnées.

Les structures 40 sont plaquées extérieurement sur le moyeu 4. En effet, comme visible sur la figure 2, chaque structure 40 est préférentiellement plaquée contre la surface extérieure 46 du moyeu au niveau de laquelle débouchent les orifices 5, et également préférentiellement contre la surface supérieure 48 du pied d'aube 8.

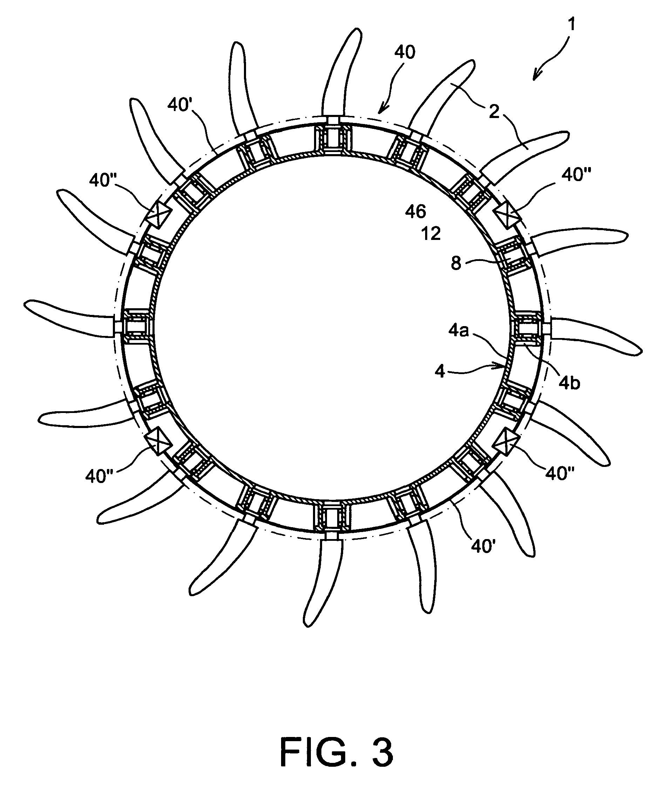

Sur la figure 3, on peut apercevoir que le moyeu 4 prend la forme d'une base annulaire 4a à travers laquelle sont pratiqués les orifices de logement 5 répartis circonférentiellement, chacun d'eux se prolongeant radialement vers l'extérieur par une collerette 4b. C'est d'ailleurs dans cette collerette 4b qu'est préférentiellement agencé le système de roulement à billes 12 destiné à coopérer avec le pied 8 afin d'autoriser le pivotement de l'aube dans son orifice 5, et donc de régler son incidence.

Ici, la surface extérieure 46 du moyeu, contre laquelle est plaquée la structure de rétention 40, est donc constituée par les extrémités radialement externes des collerettes 4b. Par conséquent, les parties de la structure de rétention 40 agencées entre les collerettes successives 4b se trouvent situées en regard et à distance de la base 4a du moyeu 4 positionnée radialement vers l'intérieur.

Dans le mode de réalisation préféré, la structure 40 est sectorisée afin de faciliter son montage. Par conséquent, il est prévu une pluralité de secteurs angulaires d'anneau 40' montés bout à bout par des dispositifs de verrouillage/déverrouillage 40". Le nombre de secteurs angulaires d'anneau 40', identique au nombre de dispositifs de verrouillage/déverrouillage 40", est par exemple compris entre trois et six. En outre, les secteurs 40' sont de préférence de même longueur angulaire.

Dans le mode de réalisation préféré représenté sur la figure 3, parmi les quatre dispositifs de verrouillage/déverrouillage 40 " interposés entre les quatre secteurs d'anneau 40', au moins l'un d'eux remplit de plus une fonction de serrage dans la direction circonférentielle. En activant ce dispositif 40", assimilable alors à un tendeur, la structure 40 voit sa longueur circonférentielle diminuer, ce qui se traduit par un serrage accru sur le moyeu 4.

Comme cela a été schématisé, les dispositifs de verrouillage/déverrouillage 40" sont préférentiellement agencés entre les collerettes 4b du moyeu 4, de manière à se situer au niveau de parties de la structure 40 agencées à distance du moyeu, et plus précisément à distance de sa base 4a.

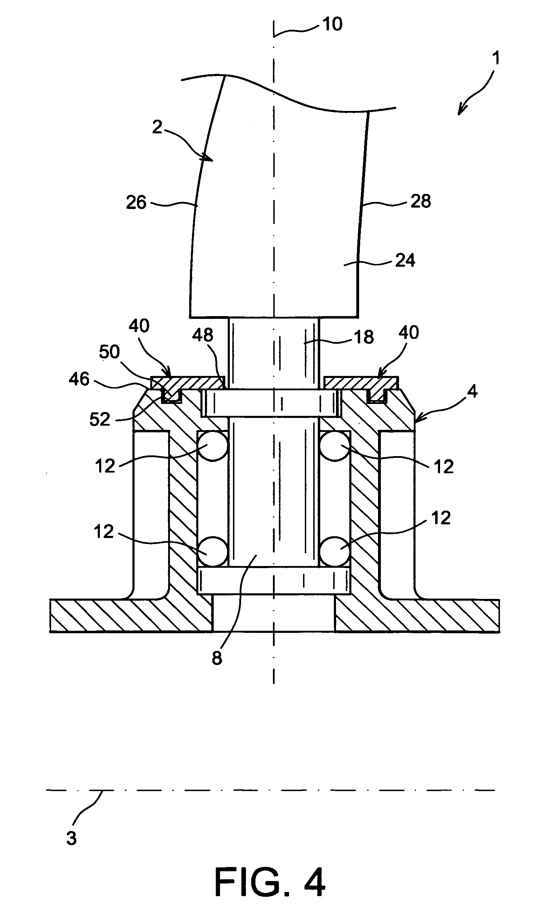

Dans l'autre mode de réalisation montré sur la figure 4, il a de plus été rajouté pour chaque structure 40, sur les secteurs angulaires qui la définissent, une saillie 50 s'étendant circonférentiellement et radialement vers l'intérieur, en étant centrée sur l'axe 3. Cette saillie 50, qui peut donc être interrompue dans la direction circonférentielle du fait de la sectorisation de la structure 40, est logée dans une rainure 52 s'étendant circonférentiellement et ouverte radialement vers l'extérieur, en étant centrée sur l'axe 3. Cette rainure 52 est pratiquée sur le moyeu 4, et plus précisément sur sa surface extérieure 46. Ainsi, chacune des deux rainures 52 est donc interrompue selon la direction circonférentielle entre les collerettes 4b qui définissent la surface extérieure 46.

Avec cette configuration, pendant le serrage de la structure 40 par les dispositifs 40 ", cette structure peut se déplacer relativement par rapport au moyeu 4 selon la direction circonférentielle par coulissement relatif de la saillie 50 dans la rainure 52, sans risquer de se déplacer axialement par rapport à ce même moyeu 4.

Bien entendu, diverses modifications peuvent être apportées par l'homme du métier à l'invention qui vient d'être décrite, uniquement à titre d'exemples non limitatifs.

## Revendications

1. Hélice (1) pour turbomachine d'aéronef comprenant une pluralité d'aubes (2) ainsi qu'un moyeu (4) présentant une pluralité d'orifices de logement (5) recevant les pieds (8) desdites aubes, chaque pied d'aube (8) étant monté rotatif dans son orifice de logement (5) associé, ladite hélice présentant également au moins une structure (40) formant anneau et plaquée autour du moyeu (4)
**caractérisée en ce que** ladite structure forme un anneau de rétention d'aubes dans la direction radiale vers l'extérieur par rapport au moyeu (4).

2. Hélice selon la revendication 1, **caractérisée en ce que** chaque structure (40) formant anneau de rétention d'aubes est équipée d'au moins un dispositif (40") de serrage dans la direction circonférentielle.

3. Hélice selon la revendication 1 ou la revendication 2, **caractérisée en ce que** pour chaque structure (40) formant anneau de rétention d'aubes, il est prévu une rainure (52) s'étendant circonférentiellement sur l'un de deux éléments parmi le moyeu (4) et la structure (40), ainsi qu'une saillie (50) s'étendant circonférentiellement sur l'autre desdits deux éléments, et logée dans ladite rainure (52).

4. Hélice selon l'une quelconque des revendications précédentes, **caractérisée en ce que** pour chaque structure (40) est réalisée à partir d'au moins deux secteurs angulaires 0') montés les uns aux autres.

5. Hélice selon l'une quelconque des revendications précédentes, **caractérisée en ce qu'**il est prévu deux structures (40), disposées respectivement de part et d'autre d'un plan transversal (P) intégrant les axes de rotation (10) des aubes.

6. Turbomachine comprenant au moins une hélice (1) selon l'une quelconque des revendications précédentes.

7. Aéronef comprenant une pluralité de turbomachines selon la revendication 6.

## Claims

1. A propeller (1) for an aircraft turbine engine comprising a plurality of vanes (2) as well as a hub (4) having a plurality of accommodating ports (5) receiving the bases (8) of said vanes, each vane base (8) being rotatably mounted in its associated accommodating port (5), said propeller also has at least one ring structure (40),
**characterised in that** said structure forms a vane retaining ring in the radial direction outwardly from the hub (4).

2. The propeller according to claim 1, **characterised in that** each vane retaining ring structure (40) is provided with at least a tightening device (40") in the circumferential direction.

3. The propeller according to claim 1 or claim 2, **characterised in that** for each vane retaining ring structure (40), a groove (52) is provided circumferentially extending on one of the two elements from the hub (4) and the structure (40), as well as a projection (50) circumferentially extending the other of said two elements, and accommodated in said groove (52).

4. The propeller according to any of the preceding claims, **characterised in that** each structure (40) is made from at least two angular sectors (40') mounted one to the other.

5. The propeller according to any of the preceding claims, **characterised in that** two structures (40) are provided, respectively on either side of a transverse plane (P) integrating the axes of rotation (10) of the vanes.

6. A turbine engine comprising at least a propeller (1) according to any of the preceding claims.

7. An aircraft comprising a plurality of turbine engines according to claim 6.

## Patentansprüche

1. Propeller (1) für ein Turbotriebwerk eines Luftfahrzeugs, umfassend mehrere Schaufeln (2) sowie eine Nabe (4), die mehrere Lageröffnungen (5) zur Aufnahme der Füße (8) der Schaufeln aufweist, wobei jeder Schaufelfuß (8) drehbar in dessen entsprechender Lageröffnung (5) angebracht ist, wobei der Propeller auch mindestens eine Struktur (40) aufweist, die einen Ring bildet und rings um die Nabe (4) aufgebracht ist,
**dadurch gekennzeichnet, dass** die Struktur einen Schaufelhalterungsring in der radialen Richtung nach außen in Bezug auf die Nabe (4) bildet.

2. Propeller nach Anspruch 1, **dadurch gekennzeichnet, dass** jede Struktur (40), die einen Schaufelhalterungsring bildet, mit mindestens einer Spannvorrichtung (40") in Umfangsrichtung ausgestattet ist.

3. Propeller nach Anspruch 1 oder Anspruch 2, **dadurch gekennzeichnet, dass** für jede Struktur (40), die einen Schaufelhalterungsring bildet, eine Rille (52), die sich in Umfangsrichtung auf einem der beiden Elemente von der Nabe (4) und der Struktur (40) erstreckt, sowie eine Auskragung (50), die sich in Umfangsrichtung auf dem anderen der beiden Elemente erstreckt und in der Rille (52) gelagert ist, angebracht ist.

4. Propeller nach einem der vorhergehenden Ansprüche, **dadurch gekennzeichnet, dass** für jede Struktur (40) eine Realisierung ausgehend von mindestens zwei Winkelabschnitten (40'), die aneinander angebracht sind, erfolgt ist.

5. Propeller nach einem der vorhergehenden Ansprüche, **dadurch gekennzeichnet, dass** zwei Strukturen (40) angebracht sind, die jeweils auf der einen bzw. der anderen Seite einer Transversalebene (P), die die Drehachse (10) der Schaufeln enthält, angebracht sind.

6. Turbotriebwerk, umfassend mindestens einen Propeller (1) nach einem der vorhergehenden Ansprüche.

7. Luftfahrzeug, umfassend mehrere Turbotriebwerke nach Anspruch 6.
